# EUROPÄISCHE PATENTSCHRIFT

(11) **EP 1 353 087 B1**
(45) Veröffentlichungstag und Bekanntmachung des Hinweises auf die Patenterteilung: **12.09.2007**
(21) Anmeldenummer: 02008371.3
(22) Anmeldetag: 12.04.2002
(51) Int. Cl.: F16G 5/20, B65G 15/36, B65G 15/42

(54) **Flachriemen**
Flat belt
Courroie plate

(43) Veröffentlichungstag der Anmeldung: 15.10.2003
(73) Patentinhaber: ContiTech Antriebssysteme GmbH, 30165 Hannover (DE)
(72) Erfinder: Bederna, Christoph Dr., 31515 Wunstorf (DE); Göser, Hubert, 29451 Dannenberg (DE); Hüls, Achim, 30890 Barsinghausen (DE)
(74) Vertreter: Finger, Karsten

(56) Entgegenhaltungen:
- EP-A- 0 018 456
- EP-A- 0 440 425
- WO-A-86/01464
- US-A- 3 911 755
- US-A- 4 642 080
- US-A- 5 704 862

## Beschreibung

### Anwendungsgebiet

Die Erfindung betrifft einen Flachriemen, insbesondere für die Aufzugstechnik, gemäß dem Oberbegriff des Anspruchs 1. Außerdem betrifft die Erfindung eine Vorrichtung-gemäß Anspruch 9 - zur Herstellung eines solchen Flachriemens.

### Stand der Technik

Stahlseelenarmierte Polyurethangurte haben Einzug in die Aufzugstechnik genommen und bilden dort das Herzstück des Antriebssystems (siehe z. B. US-A-5 704 862).

Um eine hohe Lebensdauer der stahlseelenarmierten Flachgurte zu gewährleisten, wird vorgegeben, dass sich sämtliche Corde auf exakt gleichem Biegeradius befinden. Da die Flachriemen - insbesondere in der Aufzugstechnik - beidseitig umgelenkt werden, sollen die Corde zudem vorzugsweise exakt in der Riemenmitte positioniert werden. Um diese Vorgaben zu verwirklichen, weist die mindestens eine Ausformtrommel der Fertigungsanlage Querstege auf, deren Höhe der Dicke der auf dieser Seite auf die Corde aufgebrachten Elastomerschicht entspricht.

Während der Riemenfertigung prägen die Querstege Quernuten in die noch formbare Elastomermasse. Da diese Nuten die Elastomerschicht bis zur Lage der Corde durchdringen, wird auf diese Weise eine Positionierung der Corde in exakt gleicher Ebene erzielt. Der fertiggestellte Flachriemen weist auf einer seiner Oberflächen die von den Stegen eingeprägten Nuten (Querkerbungen) auf, die in zueinander gleichen Abständen angeordnet sind.

Bei der Umschlingung insbesondere einer kleindimensionierten profillosen Rolle (Riemenscheibe) ergibt ein solcher mit Querkerben versehener Flachriemen ein Polygon, das zu beiden Seiten der Rolle Schwingungen von drehzahlabhängiger Frequenz erzeugt. Zudem entsteht beim Auftreffen der zwischen den Quernuten befindlichen Riemensegmente auf die Riemenscheibe ein monotonales Geräusch, das ebenfalls als störend empfunden wird.

### Aufgabe, Lösung und Vorteile der Erfindung

Die Aufgabe der Erfindung besteht darin, eine solche Geräuschbelästigung zu vermeiden. Der Riemen soll geräuscharm laufen und zu keinen Schwingungen anregen.
Diese Aufgabe wird im wesentlichen mit den Merkmalen des Anspruchs 1 gelöst.

Dadurch, dass die auf einer der Riemenflächen befindlichen Quereinkerbungen keinen konstanten sondern unregelmäßigen Abstand voneinander aufweisen, wird das sonst beim Betreiben des Riemens auftretende turbinenartige monotonale "Pfeifen" mit drehzahlabhängiger Frequenz vermieden.
Anstelle einer monotonalen Auftrefffrequenz auf die Riemenscheibe und das durch die Polygonwirkung verursachte monotonale Schwingen entsteht ein mehr oder weniger weißes Rauschen, was weniger lästig ist.
Dabei hat sich die mit Anspruch 3 genannte Variation der Abstände voneinander als besonderes vorteilhaft erwiesen.

Die erfindungsgemäße Idee, wonach die Abstände der auf Flachriemen angeordneten Quernuten variabel sind und insbesondere eine statistische Verteilung aufweisen, wird in einem zweiten Erfindungsschritt weiterentwickelt, indem die Querkerbungen nun nicht rechtwinklig zur Riemenkante verlaufen sondern vorzugsweise in Form von bogen- oder keilförmigen Einkerbungen oder links/rechts schräg zur Riemenkante geneigten Kerbungen ausgebildet sind.

Diesbezüglich werden die folgenden geometrischen Details bevorzugt:
- Die Kerben laufen von der Riemenmitte mit einem Winkel von jeweils (50 ± 3)° zu den Riemenkanten.
- Im Übergang zur Riemenkante und im Umkehrpunkt in der Riemenmitte verläuft die Kerbe in einem Radius R = (3 ± 1) mm.
- Der Abstand zwischen den Kerben ist unregelmäßig und wechselt unregelmäßig zwischen 8, 10 und 12 mm (je ±1 mm).

Für andere Riemenbreiten haben sich folgende Dimensionierungen als besonderes vorteilhaft erwiesen:
- Mittlerer Kerbenabstand t = 30% der Riemenbreite b (± 5 %).
- Differenz zwischen größtem tₘₐₓ und kleinstem tₘᵢₙ Kerbenabstand 10 % der Riemenbreite b (± 2 %).
- Übergangsradius 5 ... 15 % der Riemenbreite b.
- Der Winkel α ist so groß (± 5 %), dass für den mittleren Kerbenabstand t folgender Zusammenhang gilt: a > t, wobei: tan α = b/2a.

Da die Einkerbungen, insbesondere deren Beabstandungen voneinander, erfindungsgemäß keine Gleichförmigkeit aufweisen, ergibt sich auch keine monotonale Polygonfrequenz. Durch die Weiterführung wird eine schlagartige Ineingriffnahme der Riemenabschnitte mit der Riemenscheibe vermieden, so dass insgesamt eine Geräuschentwicklung verhindert wird. Auf Dämpfungsmaßnahmen kann somit völlig verzichtet werden.

### Zeichnungen

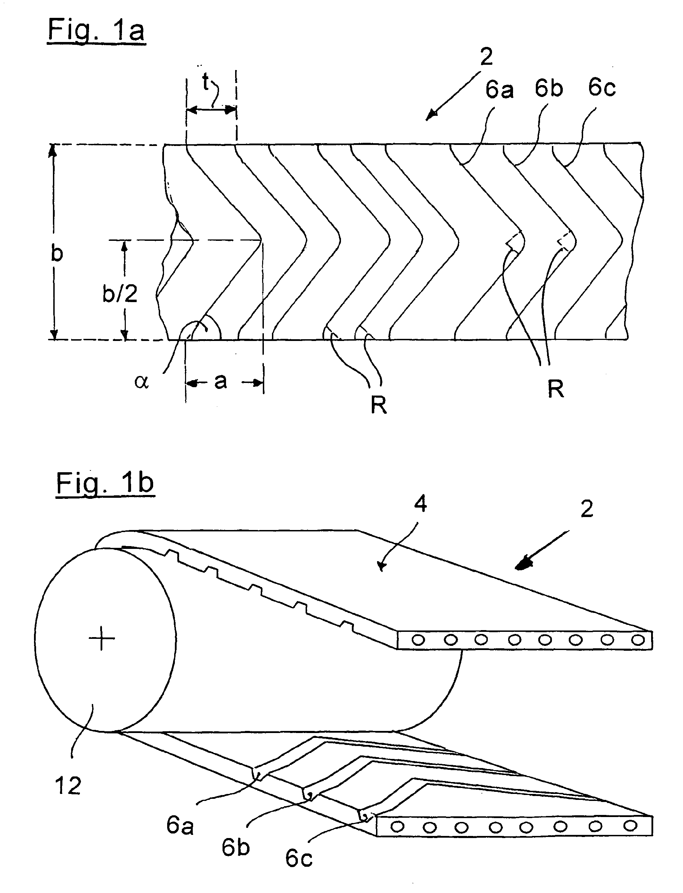

Ein Ausführungsbeispiel des erfindungsgemäßen Flachriemens ist als Prinzipzeichnung in Fig. 1a dargestellt;
Fig. 1b zeigt einen erfindungsgemäßen Flachriemen nebst Rolle in perspektivischer Ansicht (keine Schwingungsanregung durch "Einrollen" der Querkanten);
Fig. 2 zeigt einen gekerbten Flachriemen gemäß dem Stand der Technik, und zwar:
Fig. 2a eine Prinzipdarstellung des Riemens in Draufsicht;
Fig. 2b eine Seitenansicht des Standard-Flachriemens nebst Rolle (Schwingungsanregung beim Ein- und Austritt der "rechtwinklig" zur Riemenkante verlaufenden Wickelnasen). Es zeigt:
Fig. 2c zeigt einen Querschnitt durch einen Flachriemen;
Fig. 3a die Prinzipdarstellung einer Vorrichtung zur Herstellung des Flachriemens; und
Fig. 3b das Detail "Ausformeinheit".

### Beschreibung

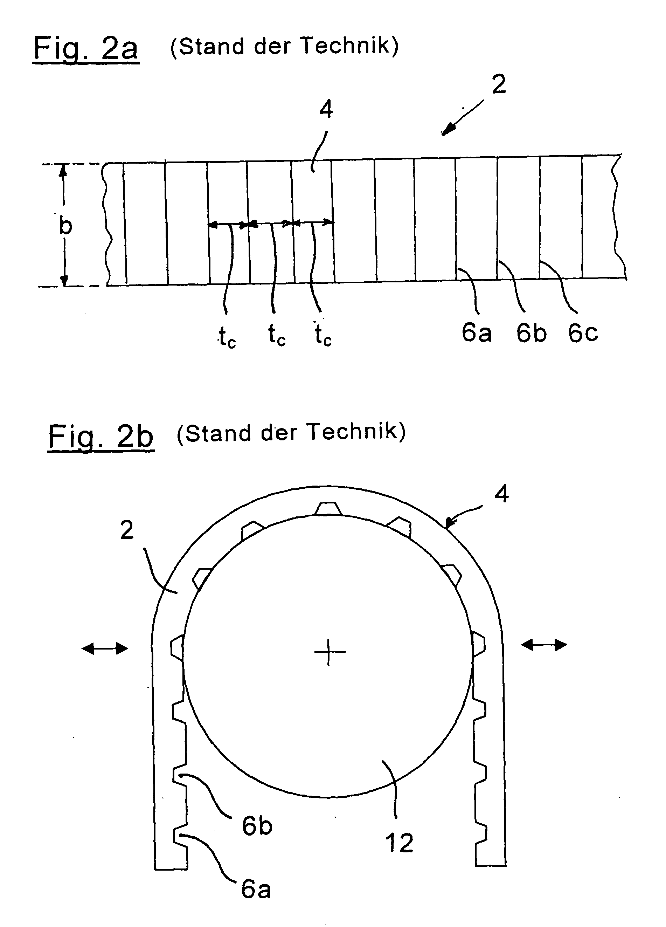

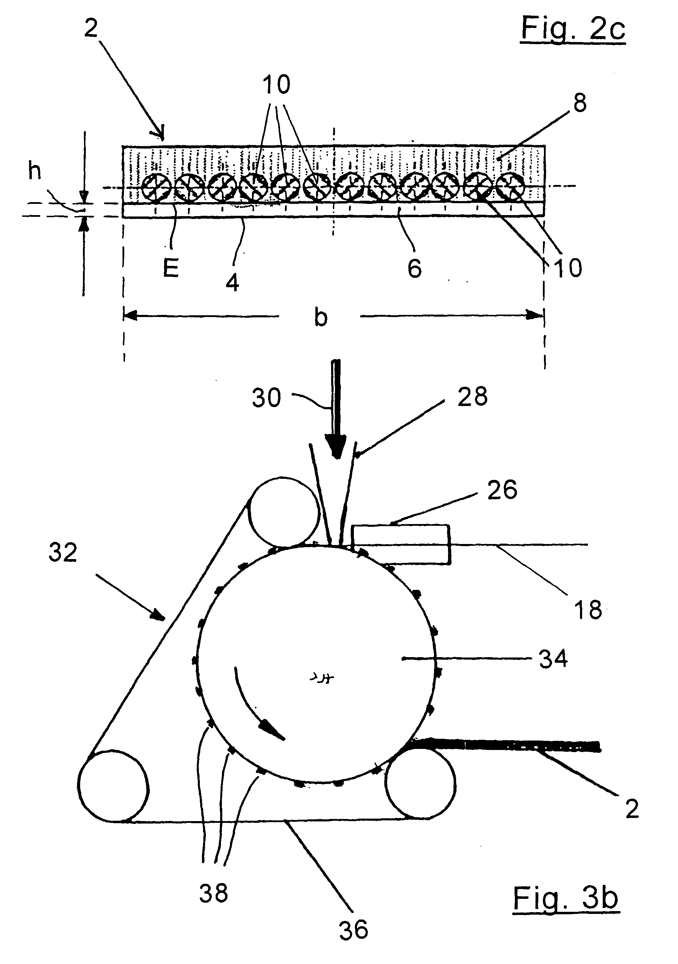

Ein in Fig. 2 dargestellter herkömmlicher Flachriemen 2, wie er der erfindungsgemäßen Weiterentwicklung zugrunde liegt, besteht aus elastomerem Material, z. B. Polyurethan 8. Im Innern ist der Riemen 2 in herkömmlicher Weise mit zugfesten Stahlseilen 10 durchzogen. Die hier interessierende Seite 4 des Flachriemens 2 weist Einkerbungen 6a, 6b, 6c, ... auf, deren Tiefe h bis an die Ebene E der Stahlcorde 10 reicht (Fig. 2c).

Bei dem in Fig. 2a als Prinzipskizze dargestellten (Standard-)Flachriemen 2 sind die Einkerbungen 6a, ... rechtwinklig zum Riemenrand ausgerichtet und gleichmäßig voneinander beabstandet (Abstand t_{c}).

Die Einkerbungen 6a, ... des in Fig. 1 als Prinzipskizze dargestellten erfindungsgemäßen Flachriemens 2 unterscheiden sich von den Standard-Einkerbungen 6a, ... in vielfacher Weise:
Der Abstand t der Einkerbungen 6a, ... voneinander ist nicht konstant (d. h. nicht gleich t_{c}) sondern es ist eine statistische Verteilung der Abstandsgröße t von jeweils benachbarten Einkerbungen 6a, ... gegeben, wobei gilt: tₘᵢₙ < t < tₘₐₓ. In dem dargestellten Ausführungsbeispiel schwankt der Abstand t von einer Kerbe 6a, ... zur nächsten 6b, ... zwischen tₘᵢₙ = 8 mm und tₘₐₓ = 12 mm. Außerdem sind die Einkerbungen 6a, ... nicht rechtwinklig zur Riemenkante ausgerichtet sondern pfeilförmig ausgebildet. Dabei laufen die Kerben 6a, ... von der Riemenmitte unter einem Winkel α von 50° zu den Riemenkanten. Im Übergang zur Riemenkante und im Umkehrpunkt in der Riemenmitte weisen die Kerben 6a, ... einen Radius R = 3 mm auf.

Die Fig. 1b und 2b zeigen, wie ein erfindungsgemäßer (Fig. 1b) bzw. ein Standard-Riemen 2 (Fig. 2b) jeweils eine profillose Rolle 12 umschlingt.

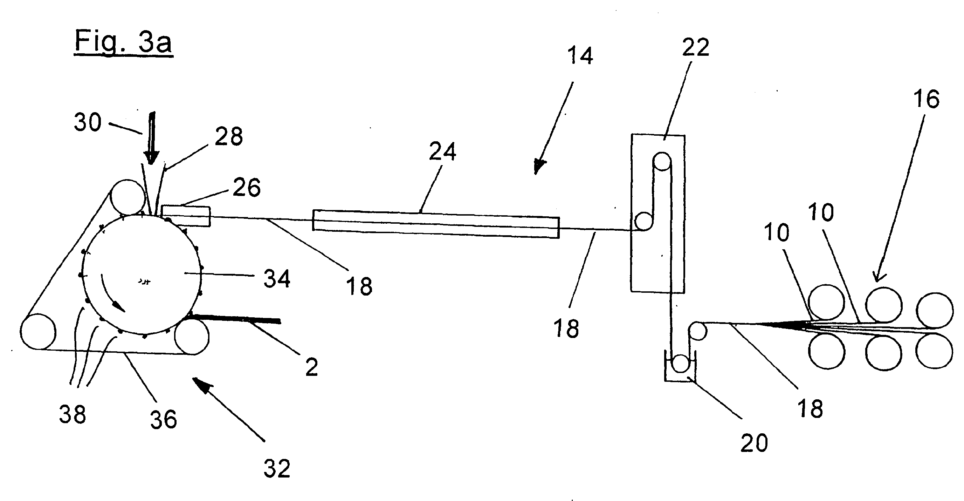

Die Herstellung der erfindungsgemäßen Flachriemen 2 basiert auf einem herkömmlichen Verfahren: Auf der in Fig. 3a/b dargestellten Vorrichtung 14 werden Stahlcorde 10 von einem Spulengatter 16 abgezogenen und laufen als parallele Bahn 18 durch ein Tauchbad 20, wo sie mit einem Haftvermittler versehen und anschließend in einem Ofen 22 getrocknet werden. In zwei Heizzonen 24, 26 wird die parallele Lage 18 von Stahlcorden 10 auf gewünschte Temperatur gebracht. Durch die Düse 28 eines Extruders wird die Schmelze 30 eines Thermoplasten oder eines thermoplastischen Elastomers auf die Stahlcorde 10 aufgebracht. Die heiße Schmelze 30 dringt bis in die Zwischenräume zwischen den einzelnen Stahlseilen 10 der Stahlseil-Lage 18 ein.

In einer Ausformeinheit 32 aus gekühlter Ausformtrommel 34 mit dagegen pressendem Stahlband 36 wird der Flachriemen 2 ausgeformt (siehe auch Fig. 3b). Die Ausformtrommel 34 weist auf seinem Umfang Querstege 38 zur exakten Positionierung der Corde 10 in der Riemenmitte auf. Bei herkömmlichen Ausformtrommeln 34 sind die Querstege 38 rechtwinklig zur Laufrichtung angeordnet und weisen konstante Abstände t_{c} (Fig. 2a) zueinander auf.

Die erfindungsgemäße Besonderheit besteht nun darin, dass die Abstände t der Querstege 38 nicht konstant sondern variabel sind. Vorzugsweise weist die Beabstandung t der einzelnen Querstege 38 voneinander eine statistische Verteilung auf.
Nach einer weiteren Ausgestaltung der Erfindung sind die quer angeordneten Querstege 38 nicht rechtwinklig zur Laufrichtung sondern links/rechts schräg geneigt.
Auch können die Querstege 38 bogen- oder keilförmig ausgebildet sein, wodurch eine Polygonwirkung beim abrollenden Riemen 2 praktisch gänzlich vermieden wird.
Die beiden Maßnahmen: Unterschiedliche Beabstandung der Querstege 38 voneinander und eine spezielle Ausgestaltung der Querstege 38 lassen sich in vorteilhafter Weise miteinander kombinieren.

### Bezugszeichenliste

- 2: Flachriemen
- 4: Seite des Flachriemens
- 6a, 6b, 6c: Querkerbe(n), Kerbe(n), Nuten
- t_{c}: konstanter Abstand zweier (Quer-)Kerben voneinander
- tₘᵢₙ < t < tₘₐₓ: unterschiedlicher Abstand zweier (Quer-)Kerben voneinander
- α: Winkel zwischen Riemenkante und Querkerbung
- R: Radius der links/rechts geneigten Querkerbungen im Umkehrpunkt in der Riemenmitte und im Übergang zur Riemenkante
- b: Riemenbreite
- h: Tiefe der Nuten
- 8: elastomeres Material
- 10: (Stahl-)Corde, Stahlseile
- E: Ebene der Stahlcorde
- 12: profillose Rolle
- 14: Vorrichtung
- 16: Spulengatter
- 18: Stahlcord-Bahn, Lage
- 20: Tauchbad
- 22: Ofen
- 24, 26: Heizzone
- 28: Extruder-Düse
- 30: Schmelze (elastomeres Material)
- 32: Ausformeinheit
- 34: Ausformtrommel
- 36: Stahlband
- 38: Quersteg(e)

## Patentansprüche

1. Aus elastomerem Material (8) bestehender, mit Corden (10) armierter und an einer seiner Oberflächen (4) mit Querkerben (6a, 6b, 6c, ...) versehener Flachriemen (2), insbesondere als Antriebsmittel in einer Aufzugsanordnung,
**dadurch gekennzeichnet,**
**dass** die Querkerben (6a, 6b, 6c, ...) unterschiedlich voneinander beabstandet sind.

2. Flachriemen nach Anspruch 1,
**dadurch gekennzeichnet,**
**dass** die unterschiedliche Beabstandung (tₘᵢₙ < t < tₘₐₓ) der Kerben (6a, ...) voneinander statistisch verteilt ist.

3. Flachriemen nach Anspruch 1 oder 2,
dass der Abstand (t) zweier zueinander benachbarter Kerben (6a, ...) zwischen 8, 10 und 12 mm (je ± 1 mm) wechselt.

4. Flachriemen nach einem der Ansprüche 1 bis 3,
**dadurch gekennzeichnet,**
**dass** die Kerben (6a, ...) nicht rechtwinklig zur Riemenkante sondern links/rechts schräg geneigt verlaufen.

5. Flachriemen nach einem der Ansprüche 1 bis 3,
**dadurch gekennzeichnet,**
**dass** die Kerben (6a, ...) bogen- oder keilförmig ausgebildet sind.

6. Flachriemen nach einem der vorhergehenden Ansprüche,
**dadurch gekennzeichnet,**
**dass** die Kerben (6a, ...) bei einem 30 mm breiten Flachriemen (2) von der Riemenmitte mit einem Winkel α von jeweils 50° (± 3°) zu den Riemenkanten verlaufen.

7. Flachriemen nach einem der Ansprüche 1 bis 6,
**dadurch gekennzeichnet,**
**dass** die Kerben (6a, ...) bei einem 30 mm breiten Flachriemen (2) im Übergang zur Riemenkante und im Umkehrpunkt in der Riemenmitte in einem Radius R = (3 ± 1) mm verlaufen.

8. Flachriemen nach einem der Ansprüche 1 bis 7,
**dadurch gekennzeichnet,**
- **dass** der mittlere Kerbenabstand t = 30% der Riemenbreite b (± 5 %),
- **dass** die Differenz zwischen größtem tₘₐₓ und kleinstem Kerbenabstand tₘᵢₙ Kerbenabstand 10% der Riemenbreite b (± 2 %),
- **dass** der Übergangsradius 5 ... 15 % der Riemenbreite b ist, und
- **dass** der Winkel α (± 5 %) so groß ist, dass für den mittleren Kerbenabstand a > t, wobei gilt: tan α = b/2a.

9. Vorrichtung (14) zur Herstellung eines aus elastomerem Material (8) bestehenden, mit Corden (10) armierten und an einer seiner Oberflächen (4) mit Querkerben (6a, 6b, 6c, ...) versehenen Flachriemens (2),
die eine Ausformeinheit (32) mit einer gekühlten, drehbaren und auf seinem Umfang mit Querstegen (38) versehenen Ausformtrommel (34) und dagegen pressendem Stahlband (36) aufweist,
**dadurch gekennzeichnet,**
**dass** die quer auf dem Umfang der Ausformtrommel (34) angeordneten Querstege (38) unterschiedlich voneinander beabstandet sind.

10. Vorrichtung nach Anspruch 9,
**dadurch gekennzeichnet,**
**dass** die Querstege (38) nicht rechtwinklig zur Laufrichtung der Ausformtrommel (34) sondern links/rechts schräg geneigt verlaufen.

11. Vorrichtung nach Anspruch 9 oder 10,
**dadurch gekennzeichnet,**
**dass** die Querstege (38) bogen- oder keilförmig ausgebildet sind.

## Claims

1. Flat belt (2), consisting of elastomeric material (8), reinforced with cords (10) and provided on one of its surfaces (4) with transverse grooves (6a, 6b, 6c, ...), in particular as a drive means in a lift arrangement, **characterized in that** the transverse grooves (6a, 6b, 6c, ...) are spaced at differing intervals from one another.

2. Flat belt according to Claim 1, **characterized in that** the differing spacing (tₘᵢₙ < t < tₘₐₓ) of the grooves (6a, ...) is at intervals randomly distributed from one another.

3. Flat belt according to Claim 1 or 2, **characterized in that** the distance (t) between two mutually adjacent grooves (6a, ...) changes between 8, 10 and 12 mm (±1 mm each).

4. Flat belt according to one of Claims 1 to 3, **characterized in that** the grooves (6a, ...) do not run at right angles in relation to the edge of the belt but slanting to the left/right.

5. Flat belt according to one of Claims 1 to 3, **characterized in that** the grooves (6a, ...) are formed in an arcuate or wedge-shaped manner.

6. Flat belt according to one of the preceding claims, **characterized in that**, in the case of a flat belt (2) 30 mm wide, the grooves (6a, ...) extend from the middle of the belt to the edges of the belt at an angle α of in each case 50° (±3°).

7. Flat belt according to one of Claims 1 to 6, **characterized in that**, in the case of a flat belt (2) 30 mm wide, the grooves (6a, ...) extend at the transition to the edge of the belt and at the point of inflection in the middle of the belt with a radius R = (3 ± 1) mm.

8. Flat belt according to one of Claims 1 to 7, **characterized**
- **in that** the average groove spacing is t = 30% of the belt width b (±5%),
- **in that** the difference between the greatest groove spacing tₘₐₓ and the smallest groove spacing tₘᵢₙ is 10% of the belt width b (±2%),
- **in that** the transition radius is 5 ... 15% of the belt width b, and
- **in that** the angle α (±5%) is so great that, for the average groove spacing, a > t, where tan α = b/2a.

9. Apparatus (14) for producing a flat belt (2), consisting of elastomeric material (8), reinforced with cords (10) and provided on one of its surfaces (4) with transverse grooves (6a, 6b, 6c, ...), which apparatus has a shaping unit (32) with a shaping drum (34), which is cooled, rotatable and provided on its circumference with transverse ridges (38), and a steel strip (36) pressing against the said drum, **characterized in that** the transverse ridges (38) arranged transversely on the circumference of the shaping drum (34) are spaced at differing intervals from one another.

10. Apparatus according to Claim 9, **characterized in that** the transverse ridges (38) do not extend at right angles in relation to the running direction of the shaping drum (34) but slanting to the left/right.

11. Apparatus according to Claim 9 or 10, **characterized in that** the transverse ridges (38) are formed in an arcuate or wedge-shaped manner.

## Revendications

1. Courroie plate (2), composée d'un matériau élastomère (8), armée de cordes (10) et pourvue d'encoches transversales (6a, 6b, 6c, ...) sur une de ses surfaces (4), en particulier comme moyen d'entraînement dans une installation d'ascenseur, **caractérisée en ce que** les encoches transversales (6a, 6b, 6c, ...) sont espacées différemment les unes des autres.

2. Courroie plate selon la revendication 1, **caractérisée en ce que** l'espacement différent (tₘᵢₙ < t < tₘₐₓ) des encoches (6a, ...) est réparti statistiquement entre elles.

3. Courroie plate selon la revendication 1 ou 2, **caractérisée en ce que** la distance (t) entre deux encoches voisines successives (6a, ...) varie entre 8, 10 et 12 mm (chaque fois ± 1 mm).

4. Courroie plate selon l'une quelconque des revendications 1 à 3, **caractérisée en ce que** les encoches (6a, ...) ne sont pas perpendiculaires au bord de la courroie mais sont inclinées en oblique vers la gauche et vers la droite.

5. Courroie plate selon l'une quelconque des revendications 1 à 3, **caractérisée en ce que** les encoches (6a, ...) sont en forme d'arc ou de coin.

6. Courroie plate selon l'une quelconque des revendications précédentes, **caractérisée en ce que** les encoches (6a, ...) sont orientées avec un angle α chaque fois de 50° (± 3°) à partir du milieu de la courroie vers les bords de la courroie, dans une courroie plate (2) d'une largeur de 30 mm.

7. Courroie plate selon l'une quelconque des revendications 1 à 6, **caractérisée en ce que** les encoches (6a, ...) présentent un rayon de courbure R = (3 ± 1) mm dans la transition vers le bord de la courroie et au point d'inversion au milieu de la courroie, dans une courroie plate (2) d'une largeur de 30 mm.

8. Courroie plate selon l'une quelconque des revendications 1 à 7, **caractérisée en ce que**
- la distance moyenne des encoches t = 30 % de la largeur de courroie b (± 5 %),
- la différence entre le plus grand espacement des encoches tₘₐₓ et le plus petit tₘᵢₙ vaut 10 % de la largeur de courroie b (± 2 %),
- le rayon de transition vaut 5 ... 15 % de la largeur de courroie b, et
- l'angle α (± 5 %) est tel que, pour la distance moyenne des encoches, on a a > t avec tan α = b/2a.

9. Dispositif (14) pour la fabrication d'une courroie plate (2) composée d'un matériau élastomère (8), armée de cordes (10) et pourvue d'encoches transversales (6a, 6b, 6c, ...) sur une de ses surfaces (4), qui comprend une unité de formage (32) comportant un tambour de formage (34) refroidi, rotatif et pourvu de nervures transversales (38) sur sa périphérie, et une bande d'acier (36) pressant contre celui-ci, **caractérisé en ce que** les nervures transversales (38) disposées sur la périphérie du tambour de formage (34) sont espacées différemment les unes des autres.

10. Dispositif selon la revendication 9, **caractérisé en ce que** les nervures transversales (38) ne sont pas perpendiculaires à la direction de mouvement du tambour de formage (34), mais sont inclinées en oblique vers la gauche et vers la droite.

11. Dispositif selon la revendication 9 ou 10, **caractérisé en ce que** les nervures transversales (38) sont en forme d'arc ou de coin.
